# EUROPÄISCHE PATENTSCHRIFT

(11) **EP 1 691 180 B1**
(45) Veröffentlichungstag und Bekanntmachung des Hinweises auf die Patenterteilung: **03.07.2013**
(21) Anmeldenummer: 06001263.0
(22) Anmeldetag: 21.01.2006
(51) Int. Cl.: G02B 21/36, G02B 3/00, G01J 3/36, G01J 3/28, G01J 3/02

(54) **Detektor mit Mikrolinsen-Anordnung**
Detector with microlens arrangement
Détecteur avec un agencement de microlentilles

(30) Priorität: 13.12.2005 DE 102005059948; 31.01.2005 DE 202005019248 U
(43) Veröffentlichungstag der Anmeldung: 16.08.2006
(60) Teilanmeldung: 08004867.1
(73) Patentinhaber: Leica Microsystems CMS GmbH, 35578 Wetzlar (DE)
(72) Erfinder: Seyfried, Volker, Dr., 69226 Nussloch (DE); Schreiber, Frank, 69221 Dossenheim (DE)
(74) Vertreter: Ullrich & Naumann

(56) Entgegenhaltungen:
- WO-A-02/14811
- US-A- 4 230 942
- US-A1- 2001 028 223
- US-A1- 2005 012 927
- US-B1- 6 400 513
- PATENT ABSTRACTS OF JAPAN Bd. 2000, Nr. 14, 5. März 2001 (2001-03-05) & JP 2000 304614 A (YOKOGAWA ELECTRIC CORP), 2. November 2000 (2000-11-02)

## Beschreibung

Die vorliegende Erfindung betrifft einen Detektor mit den Merkmalen des Oberbegriffs des Anspruchs 1.

Detektoren der eingangs genannten Art sind aus der Praxis bekannt und werden bspw. in einem konfokalen Mikroskop zur spektralen Detektion eingesetzt. Dabei wird nach dem Detektionspinhole des konfokalen Mikroskops das Licht durch eine Linse kollimiert, das kollimierte Licht in einem dispersiven Element wie bspw. in einem Gitter, Prisma oder Hologramm spektral aufgespalten und das spektral aufgespaltene Licht mit einer Linse auf die photosensitive Anordnung, beispielsweise eine CCD-Anordnung, fokussiert.

Bei den bekannten Systemen ist jedoch problematisch, dass erreichbare Spotdurchmesser typischerweise in der Größenordnung von 100 µm bis 600 µm - abhängig von der Größe des konfokalen Pinholes - sowohl in der Richtung der spektralen Aufspaltung als auch in der dazu senkrechten Richtung liegen. Dies übersteigt die Größe von einzelnen Pixeln in gängigen photosensitiven Anordnungen um ein Vielfaches. Grundsätzlich kann man diesem Nachteil dadurch Rechnung tragen, dass man entweder größere Pixel verwendet oder aber mehrere Pixel zum Auslesen eines einzelnen Spots benutzt. Beides erhöht jedoch die benötigte Auslesezeit pro Spot, d. h. pro Detektionswellenlänge signifikant, so dass die Detektionsgeschwindigkeit für die meisten Aufgabenstellungen zu gering ist.

Aus der US 2005/0012927 A1 ist ein Detektor mit einer fotosensitiven Anordnung und mit einer Mikrolinsen-Anordnung zur Fokussierung von spektral aufgespaltenem Licht bekannt. Dabei wird ein Mikrolinsen-Array verwendet, um eine besonders effektive Kollimierung einzelner spektraler Komponenten zu erreichen.

Aus der WO 02/14811 A1 ist ebenfalls ein Detektor mit einem Mikrolinsen-Array bekannt, das das Auftreffen des spektral zerlegten Lichts auf die Zentren der Detektorelemente optimiert und Totbereiche zwischen den einzelnen Fenstern des Detektors verhindert.

Aus der US 4,230,942 A ist eine Anordnung gekreuzter Zylinderlinsen für eine Strahlformung und Fokussierung bekannt.

Aus der US 2001/0028223 A1 ist eine Lichtemissionseinheit bekannt, im Rahmen derer eine individuelle Anpassung von Linsen eines Arrays zur Kompensation von chromatischen Fehlern beschrieben ist.

Aus der US 6,400,513 B1 ist eine Vorrichtung zur Kopplung von Lichtstrahlen mit unterschiedlichen Wellenlängen bekannt. Dabei werden gekreuzte Zylinderlinsen eingesetzt.

Der vorliegenden Erfindung liegt daher die Aufgabe zugrunde, einen Detektor sowie ein Spektrometer und ein Mikroskop der eingangs genannten Art anzugeben, wonach eine besonders hohe Detektionsgeschwindigkeit mit konstruktiv einfachen Mitteln erreicht ist.

Erfindungsgemäß wird die voranstehend genannte Aufgabe durch einen Detektor mit den Merkmalen des Anspruchs 1 gelöst.

Bei dem erfindungsgemäßen Detektor ist es möglich, hohe Detektionsgeschwindigkeiten auch bei der spektralen Detektion mit gängigen photosensitiven Anordnungen zu erreichen. Hierzu ist als Mittel zur Fokussierung eines spektral aufgespaltenen Lichts auf die photosensitive Anordnung eine Mikrolinsen-Anordnung mit mindestens einer Mikrolinse angegeben. Durch den Einsatz von Mikrolinsen ist es möglich, eine einzelne Detektionswellenlänge oder einen einzelnen Detektionswellenlängenbereich auf ein einzelnes Pixel zu fokussieren. Für die Detektion einer einzelnen Detektionswellenlänge oder eines einzelnen Detektionswellenlängenbereichs muss somit nur ein einzelnes Pixel ausgelesen werden.

Im Konkreten ist die photosensitive Anordnung eine CCD- oder APD-Anordnung ("Avalanche Photo Diode"). Bei CCD-Anordnungen handelt es sich heutzutage um eine Massenware, die beispielsweise in Digitalkameras in großem Umfang eingesetzt wird. Der Einsatz von APD-Anordnungen oder Lawinenphotodiode-Anordnungen erfolgt heutzutage in weit geringerem Umfang lediglich in Forschungslabors. Bei einer CCD-Anordnung liegt meist ein Füllfaktor von 100% vor. D.h. zwischen den photosensitiven Flächen liegen keine Gaps oder Lücken vor. Bei einer APD-Anordnung liegen derartige Gaps zwischen den photosensitiven Flächen vor, wobei diese Gaps ca. 150µm oder mehr betragen können.

Bei einer CCD-Anordnung werden erzeugte Ladungen von einem Pixel zum nächsten Pixel wie bei einer Eimerkette transportiert. Das Auslesen der Ladung und die Verstärkung des Signals erfolgt hierbei sequentiell. Bei einer APD-Anordnung werden die induzierten Ladungen hingegen an dem Pixel verstärkt und ausgelesen, an dem sie erzeugt werden.

Bei einer CCD-Anordnung können während eines Lesezyklus mehrere Photonen pro Pixel aufsummiert werden. Die maximale Photonenzahl ist dabei von der Pixelfläche abhängig. Bei einer APD-Anordnung erfolgt eine Einzelphotonenzählung pro Pixel. Die maximale Photonenzählrate hängt hier von der Totzeit der APD ab und liegt in der Größenordnung von 5 Millionen Counts pro Sekunde.

Pixelarrays von 1.000 x 1.000 und größer sind bei CCD-Anordnungen gängig. Die Pixelgrößen liegen dabei zwischen 5µm und 20µm. Bei APD-Anordnungen sind derzeit Pixelarrays von maximal 64 x 64 verfügbar. Die gängigen Pixelgrößen liegen dabei zwischen 20µm und 150µm.

Beim Betrieb von CCD-Anordnungen ist eine starke Kühlung zur Reduzierung des Dunkelrauschens erforderlich. Bei APD-Anordnungen ist eine Kühlung oder Peltierkühlung meist nicht notwendig.

Zur Gewährleistung einer besonders hohen Detektionsgeschwindigkeit und einer besonders sicheren Detektion spektral aufgespaltenen Lichts ist die Mikrolinsen-Anordnung zur Fokussierung in Richtung der spektralen Aufspaltung und zusätzlich in hierzu senkrechter Richtung ausgebildet. Hierdurch ist ein besonders großer Raum- oder Flächenbereich durch den Detektor abgedeckt.

Im Konkreten könnte die Mikrolinsen-Anordnung ein zweidimensionales Mikrolinsen-Array sein. Hierdurch ist eine sichere Abdeckung des gewünschten Raum- oder Flächenbereichs gewährleistet.

Als Mikrolinsen kommen bspw. Gradienten-Index-Linsen (GRIN) in Frage. Folglich könnten die Mikrolinsen mindestens eine Gradienten-Index-Linse aufweisen.

Als besonders bevorzugte Linsen kommen sphärische Linsen in Frage. Folglich könnten die Mikrolinsen mindestens eine sphärische Linse aufweisen. Bei einer besonders bevorzugten Ausgestaltung könnten die Mikrolinsen ausschließlich sphärische Linsen sein. Dabei könnte oder könnten die Mikrolinse oder die Mikrolinsen eine sphärische Öffnung aufweisen.

Weiterhin im Hinblick auf eine besonders hohe Detektionsgeschwindigkeit und eine besonders sichere Detektion spektral aufgespaltenen Lichts weisen die Mikrolinsen eine Kombination aus einem Mikrozylinderlinsen-Array mit Fokussierung in Richtung der spektralen Aufspaltung und mindestens einer Zylinderlinse mit Fokussierung in der dazu senkrechten Richtung auf. Die mindestens eine Zylinderlinse ist eine einzelne Zylinderlinse, eine Mikrozylinderlinse, eine Stablinse oder ein Array aus derartigen Linsen. Bei der Wahl der mindestens einen Zylinderlinse ist auf den jeweiligen Anwendungsfall abzustellen.

Grundsätzlich ist darauf zu achten, dass der Fokus in beiden Raumrichtungen sich jeweils auf der photosensitiven Anordnung befindet. Insbesondere zu diesem Zweck weisen die Mikrolinsen für die Fokussierung in die beiden Richtungen unterschiedliche Brennweiten auf. Dabei sind die Mikrolinsen für die beiden Richtungen in konstruktiv besonders einfacher Weise auf dem selben Substrat angeordnet. Hierdurch ist eine besonders einfach handhabbare Mikrolinsen-Anordnung realisiert. Dabei könnten die Mikrolinsen für die beiden Richtungen auf unterschiedlichen Seiten des Substrats angeordnet sein.

Zur Anpassung der photosensitiven Anordnung an eine asymmetrische optische Auflösung könnte die Mikrolinsen-Anordnung asymmetrische Linsen aufweisen, wobei auch in diesem Fall - wie auch ganz allgemein -die Mikrolinsen-Anordnung aus einem Array, aus einer Zeile oder aus einer Einzellinse bestehen könnte.

Die Mikrolinsen-Anordnung könnte eine Kombination zweier gekreuzter Linsen - oder Zylinderlinsen-Arrays aus vorzugsweise asymmetrischen Linsen aufweisen.

Zur Realisierung einer besonders einfach handhabbaren Mikrolinsen-Anordnung könnten die Linsen- oder Zylinderlinsen-Arrays für die beiden Richtungen auf dem selben Substrat angeordnet sein. In weiter vorteilhafter Weise könnten die Linsen - oder Zylinderlinsen-Arrays für die beiden Richtungen auf unterschiedlichen Seiten, bspw. auf der Vorderseite und auf der Rückseite, des Substrats angeordnet sein.

Bei einer konstruktiv besonders vorteilhaften Ausgestaltung könnte die Mirkolinsen-Anordnung als Fenster zur vorzugsweise hermetischen Versiegelung, insbesondere Vakuumversiegelung, für tiefgekühlte CCDs oder APDs genutzt sein.

In vorteilhafter Weise könnte die Linsengröße der einzelnen Mikrolinsen der Mikrolinsen-Anordnung in Richtung der spektralen Detektion an das jeweils vorliegende spektrale Auflösungsvermögen bei der entsprechenden Wellenlänge angepasst sein. Hierdurch kann die nichtlineare Aufspaltung des Spektrums kompensiert werden, die bspw. beim Einsatz von Prismen als dispersive Elemente entsteht.

In weiter vorteilhafter Weise könnten chromatische Fehler durch individuelle Anpassung der einzelnen Mikrolinsen kompensiert sein.

Bei dem erfindungsgemäßen Detektor ist vorteilhaft, dass durch die Verwendung von Mikrolinsen ein Raum zwischen den lichtempfindlichen Pixeln der photosensitiven Anordnung geschaffen wird, der für zusätzliche Funktionen und/oder Bauteile genutzt werden kann. Bspw. könnte der durch die Mikrolinsen erzeugte Raum zwischen den lichtempfindlichen Pixeln der photosensitiven Anordnung für die Anordnung mindestens eines Schieberegisters genutzt werden. Des Weiteren könnte der Raum alternativ oder zusätzlich für die Anordnung mindestens einer Antibloomingsperre genutzt werden, die ein Übersprechen zwischen Pixeln bei zuviel Licht verhindert.

Weiterhin alternativ oder zusätzlich könnte der durch die Mikrolinsen erzeugte Raum zwischen den lichtempfindlichen Pixeln der photosensitiven Anordnung zur Addition unterschiedlicher Pixel innerhalb der Detektionsfläche genutzt werden. Eine weitere Nutzungsmöglichkeit des Raums betrifft die Absorption von Streulicht. Hierzu könnten in dem Raum geeignete Absorptionsmittel angeordnet werden.

Zur Erhöhung der Transmission könnte die Mikrolinsen-Anordnung oberflächenvergütet sein. Alternativ oder zusätzlich hierzu könnte die Mikrolinsen-Anordnung zur Erhöhung der Absorption oder Reduzierung von Streulicht vorzugsweise lokal eine Oberflächenbeschichtung aufweisen.

Zur Realisierung eines besonders einfach handhabbaren Detektors könnte die Mikrolinsen-Anordnung auf die photosensitive Anordnung aufgebracht, aufgedampft oder aufgeprägt sein. Hierdurch ist ein einzelnes Bauteil realisiert, das die Funktionalität der Mikrolinsen-Anordnung und der photosensitiven Anordnung kombiniert.

Die photosensitive Anordnung könnte grundsätzlich aus einem einzelnen lichtempfindlichen photosensitiven Pixel mit einer Mikrolinse bestehen. Bei einer bevorzugten Ausführungsform könnte die photosensitive Anordnung ein CCD- oder APD-Zeilenarray oder ein zweidimensionales CCD- oder APD-Array aufweisen. Hierbei ist auf den jeweiligen Anwendungsfall und auf den gewünschten Komfort bei der Verarbeitung von Daten abzustellen.

Bei einer besonders vorteilhaften Ausgestaltung könnte die photosensitive Anordnung parallelisierte CCDs oder APDs oder vorzugsweise front-illuminated EMCCDs aufweisen. Grundsätzlich könnten sowohl back-illuminated EMCCDs als auch front-illuminated EMCDDs verwendet werden. Der grundsätzliche Vorteil der back-illuminated EMCCDs ist die höhere Quanteneffizienz, da das Licht nicht durch die Gate-Strukturen des EMCCD-Chips gehen muss, bevor es auf die photoaktive Fläche trifft, womit üblicherweise Detektionsverluste verbunden sind. Der Nachteil der back-illuminated EMCCDs ist, dass sie sehr dünn sind und daher schwierig herzustellen und handzuhaben sind. Durch Einsatz der erfindungsgemäßen Mikrolinsen-Anordnung steht nun Raum auf der Vorderseite des EMCCD-Chips zur Verfügung, an dem keine photoaktive Fläche notwendig ist, da die Mikrolinsen-Anordnung das Licht nur auf ausgewählte Chip-Bereiche fokussiert. Dieser Raum kann für Gate-Strukturen genutzt werden, so dass man darauf verzichten kann, Gates über der photoaktiven Fläche anzuordnen. Damit ist es möglich, die einfacher herzustellenden und handzuhabenden front-illuminated EMCCDs bei gleichzeitig hoher Quanteneffizienz einzusetzen. Die Quanteneffizienz liegt hier im Bereich der üblichen back-illuminated EMCCDs.

Die obige Aufgabe wird ebenfalls durch ein Spektrometer mit einem Detektor nach einem der Ansprüche 1 bis 9 gelöst.

Weiterhin ist die voranstehende Aufgabe durch ein Mikroskop, insbesondere Konfokal- oder Semikonfokalmikroskop, mit einem Detektor nach einem der Ansprüche 1 bis 9 gelöst. Dabei könnte das Mikroskop ein einzelnes Detektionspinhole oder einen Multispot- oder Zeilenscanner aufweisen. Mit anderen Worten könnte der Detektor sowohl in Konfokalmikroskopen mit einem einzelnen Detektionspinhole als auch in Konfokalmikroskopen oder Semikonfokalmikroskopen mit Multispot- oder Zeilenscannern eingesetzt werden. Bei einem Multispotscanner könnte die Zahl der senkrecht zur spektralen Aufspaltung angeordneten Zylinderlinsen oder Mikrolinsen in der Regel der Anzahl der Spots entsprechen.

Bei einem Zeilenscanner könnte in der Regel auf die senkrecht zur Aufspaltung angeordneten Zylinderlinsen oder Mikrolinsen verzichtet werden. Die Anzahl der photosensitiven Pixel senkrecht zur spektralen Aufspaltung entspricht dann der Zahl der Pixel pro Scanzeile.

Mit dem erfindungsgemäßen Detektor ist quasi ein Mikrolinsen-CCD oder-APD und vorzugsweise Mikrolinsen-EMCCD bereitgestellt, das in Verbindung mit einem Spektrometer und einem Mikroskop, insbesondere Konfokalmikroskop, oder in Verbindung mit einem Zeilen- oder Multispotscanner einsetzbar ist.

Hinsichtlich der Diskussion der Vorteile besonderer Ausgestaltungen des erfindungsgemäßen Detektors im Zusammenhang mit dem beanspruchten Spektrometer oder dem beanspruchten Mikroskop wird zur Vermeidung von Wiederholungen auf die bereits erfolgte Beschreibung dieser Vorteile im vorherigen Text verwiesen.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele der erfindungsgemäßen Lehre anhand der Zeichnung zu verweisen. In Verbindung mit der Erläuterung der bevorzugten Ausführungsbeispiele der erfindungsgemäßen Lehre anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines erfindungsgemäßen Detektors in einem Strahlengang mit spektraler Detektion,
- Fig. 2: in einer schematischen Darstellung ein weiteres Ausführungsbeispiel eines erfindungsgemäßen Detektors in einem Strahlengang mit spektraler Detektion,
- Fig.3: in einer schematischen Darstellung ein Ausführungsbeispiel einer Mikrolinsen-Anordnung, wobei auf beiden Seiten eines Substrats Zylinderlinsen angeordnet sind,
- Fig. 4: in einer schematischen Darstellung ein weiteres Ausführungsbeispiel einer Mikrolinsen-Anordnung, wobei Zylinderlinsen auf beiden Seiten eines Substrats angeordnet sind und die Mikrolinsengröße entlang der Richtung der spektralen Aufspaltung zunimmt,
- Fig. 5: in einer schematischen Darstellung ein weiteres Ausführungsbeispiel einer Mikrolinsen-Anordnung, wobei Zylinderlinsen auf beiden Seiten eines Substrats angeordnet sind,
- Fig. 6: in einer schematischen Darstellung ein Beispiel für die Nutzung frei gewordener Zwischenräume zur elektronischen Ladungssummation auf einer CCD-Anordnung und
- Fig. 7: in einer schematischen Darstellung ein CCD- und ein APD-Array im Vergleich.

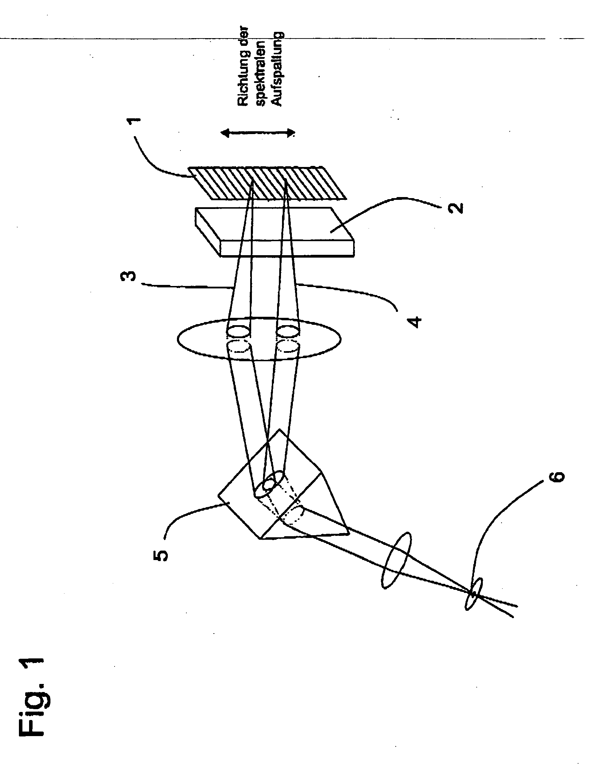

Figur 1 zeigt in einer schematischen Darstellung ein Ausführungsbeispiel eines erfindungsgemäßen Detektors, insbesondere zur spektralen Detektion von Licht in einem Mikroskop. Der Detektor weist eine CCD-Anordnung 1 mit mindestens einem CCD auf, wobei in einem Strahlengang vor der CCD-Anordnung 1 ein Mittel zur Fokussierung eines spektral aufgespaltenen Lichts auf die CCD-Anordnung 1 angeordnet ist. Im Hinblick auf eine besonders hohe Detektionsgeschwindigkeit weist das Mittel eine Mikrolinsen-Anordnung 2 mit mindestens einer Mikrolinse auf. Bei diesem sowie bei den folgenden Ausführungsbeispielen könnte anstelle einer CCD-Anordnung 1 auch eine APD-Anordnung verwendet sein.

Bei dem in Figur 1 gezeigten Ausführungsbeispiel werden zwei Lichtbündel 3 und 4, die mittels eines Prismas 5 spektral aufgespalten worden sind, auf die CCD-Anordnung 1 fokussiert. Im Strahlengang vor dem Prisma 5 ist eine Detektionslochblende 6 angeordnet.

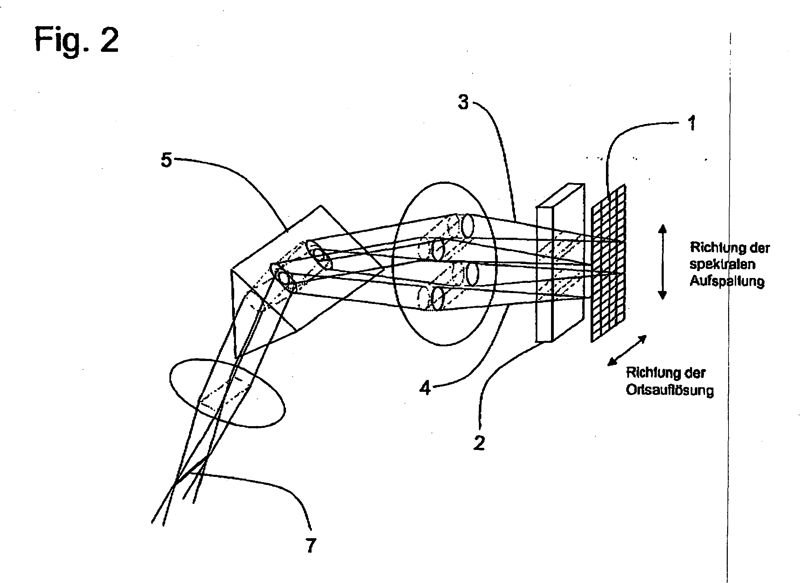

Figur 2 zeigt in einer schematischen Darstellung ein weiteres Ausführungsbeispiel eines erfindungsgemäßen Detektors, wobei hier ein Zeilenscanner eingesetzt ist. Des Weiteren ist im Strahlengang vor dem die Lichtbündel 3 und 4 erzeugenden Prisma 5 eine Detektionsschlitzblende 7 angeordnet.

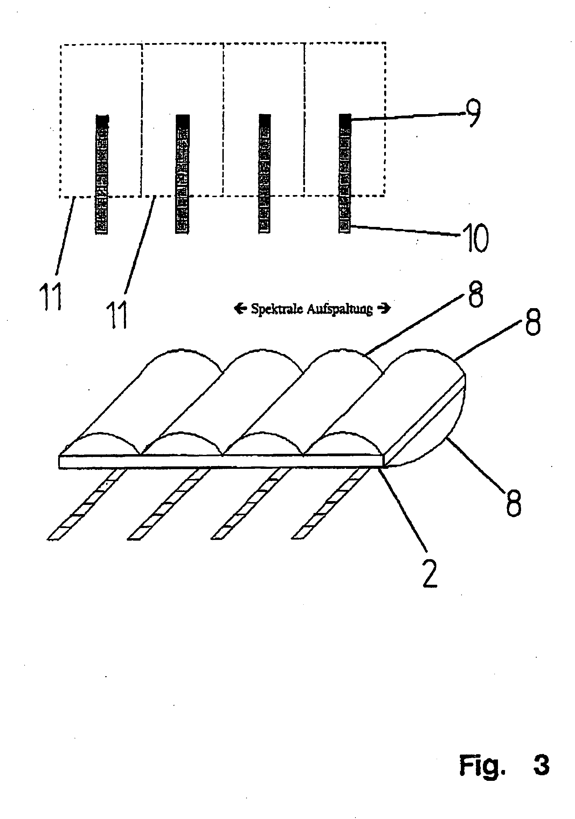

In den Figuren 3, 4 und 5 sind jeweils Mikrolinsen-Anordnungen 2 mit einzelnen Mikrolinsen 8 gezeigt. Die Mikrolinsen 8 sind auf dem selben Substrat auf Vorder - und Rückseite des Substrats angeordnet. Die in den Figuren 3 bis 5 gezeigten Ausführungsbeispiele unterscheiden sich in der Anordnung der Mikrolinsen 8. Jeder Mikrolinse 8 ist ein CCD-Pixel 9 mit einem Schieberegister 10 zugeordnet. Dabei ist in gestrichelten Linien die jeweils zu einer Mikrolinse 8 gehörige Detektionsfläche 11 gezeigt.

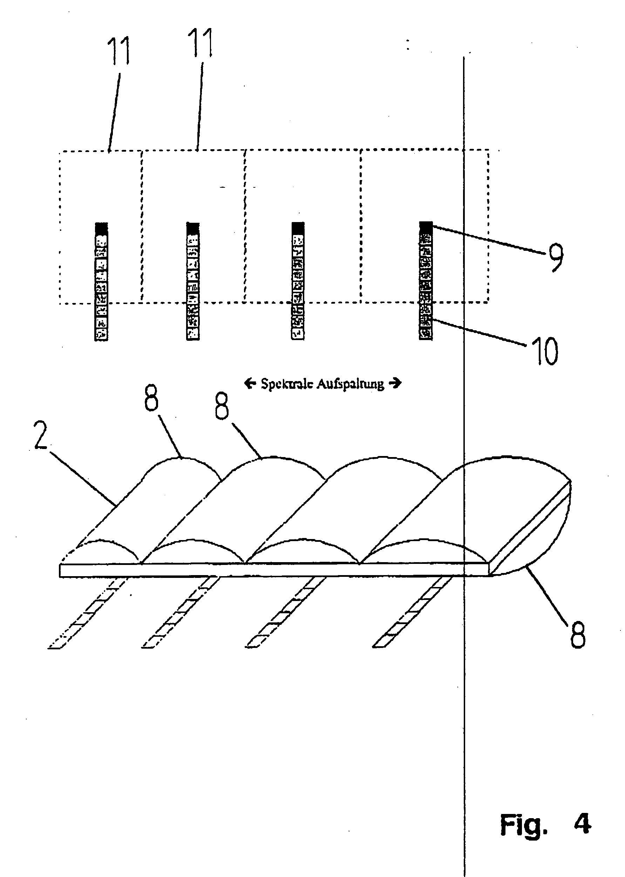

Bei dem in Figur 3 gezeigten Ausführungsbeispiel sind gleich große Mikrolinsen 8 entlang der Richtung der spektralen Aufspaltung äquidistant angeordnet. Bei dem in Figur 4 gezeigten Ausführungsbeispiel nimmt die Größe der Mikrolinsen 8 entlang der Richtung der spektralen Aufspaltung zur optimalen Anpassung bei nichtlinearer Dispersion, bspw. bei einem Prisma 5, zu. Auch der Abstand der CCD-Pixel 9 nimmt entsprechend zu.

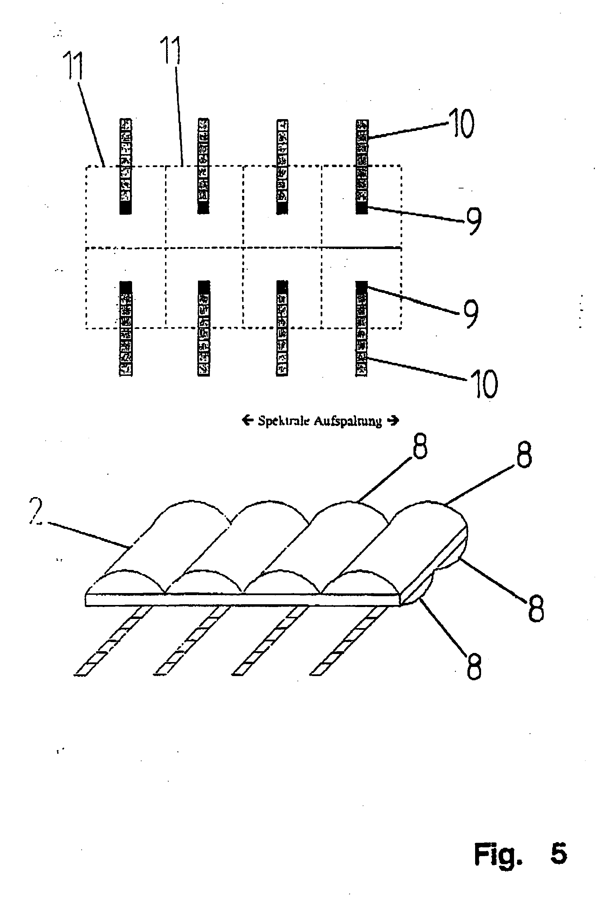

Bei dem in Figur 5 gezeigten Ausführungsbeispiel sind mehrere CCD-Pixel 9 senkrecht zur Richtung der spektralen Aufspaltung angeordnet, was eine entsprechend angepasste Mikrolinsen-Anordnung 2 mit Mikrolinsen 8 auf der Oberseite und der Unterseite des Substrats zur Folge hat.

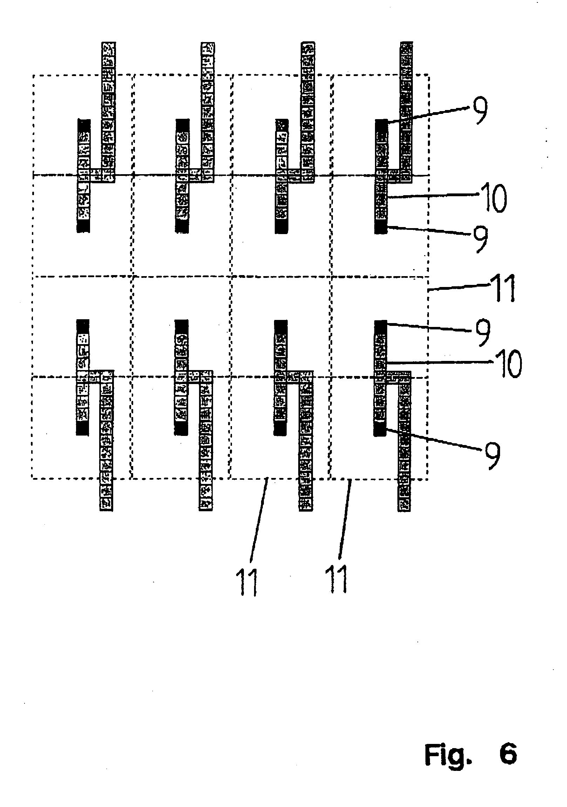

Figur 6 zeigt die Nutzung der mit dem erfindungsgemäßen Detektor frei gewordenen Zwischenräume zur elektronischen Ladungssummation. Hier sind jeweils zwei CCD-Pixeln 9 jeweils ein CCD-Schieberegister 10 zugeordnet. Die CCD-Pixel 9 sind jedoch jeweils einer Detektionsfläche 11 zugeordnet.

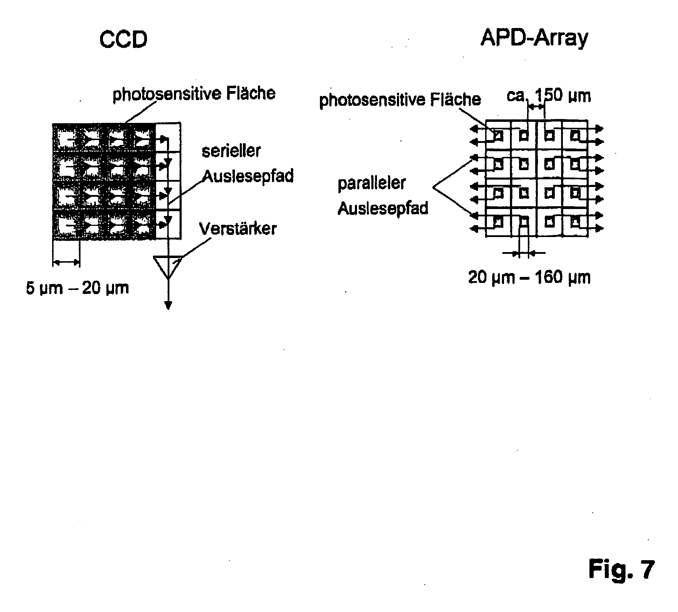

Fig. 7 zeigt ein CCD- und ein APD-Array im strukturellen Vergleich.

Hinsichtlich weiterer vorteilhafter Ausgestaltungen des erfindungsgemäßen Detektors wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

## Patentansprüche

1. Detektor zur spektralen Detektion von Licht in einem Konfokal- oder Semikonfokalmikroskop, mit
einer photosensitiven Anordnung (1) mit mindestens einer photosensitiven Fläche (9), wobei in einem Strahlengang vor der photosensitiven Anordnung (1) ein Mittel zur Fokussierung eines spektral aufgespaltenen Lichts auf die photosensitive Anordnung (1) angeordnet ist,
wobei die photosensitive Anordnung (1) eine CCD- oder APD-Anordnung ist,
wobei das Mittel zur Fokussierung eine Mikrolinsen-Anordnung (2) mit Mikrolinsen (8) aufweist und die Mikrolinsen (8) eine Kombination aus einem Mikrozylinderlinsen-Array mit Fokussierung in Richtung der spektralen Aufspaltung und mindestens einer Zylinderlinse mit Fokussierung in der dazu senkrechten Richtung aufweisen,
wobei die mindestens eine Zylinderlinse eine einzelne Zylinderlinse, eine Mikrozylinderlinse, eine Stablinse oder ein Array aus derartigen Linsen ist,
**dadurch gekennzeichnet, dass** die Mikrolinsen (8) für die Fokussierung in die beiden Richtungen unterschiedliche Brennweiten aufweisen und die Mikrolinsen (8) für die beiden Richtungen auf dem selben Substrat angeordnet sind, so dass der Fokus in beiden Raumrichtungen sich jeweils auf der photosensitiven Anordnung (1) befindet.

2. Detektor nach Anspruch 1, **dadurch gekennzeichnet, dass** die Mikrolinsen (8) mindestens eine Gradienten-Index-Linse (GRIN) oder mindestens eine sphärische Linse aufweisen oder dass die Mikrolinsen (8) ausschließlich sphärische Linsen sind.

3. Detektor nach Anspruch 1 oder 2, **dadurch gekennzeichnet, dass** die Mikrolinse (8) oder die Mikrolinsen (8) eine sphärische Öffnung aufweist oder aufweisen.

4. Detektor nach einem der Ansprüche 1 bis 3, **dadurch gekennzeichnet, dass** die Mikrolinsen-Anordnung (2) asymmetrische Linsen aufweist oder dass die Mikrolinsen-Anordnung (2) eine Kombination zweier gekreuzter Linsen- oder Zylinderlinsen-Arrays aufweist.

5. Detektor nach einem der Ansprüche 1 bis 4, **dadurch gekennzeichnet, dass** die Linsen- oder Zylinderlinsen-Arrays oder Mikrolinsen (8) für die beiden Richtungen auf unterschiedlichen Seiten des Substrats angeordnet sind.

6. Detektor nach einem der Ansprüche 1 bis 5, **dadurch gekennzeichnet, dass** die Mikrolinsen-Anordnung (2) als Fenster zur vorzugsweise hermetischen Versiegefung, insbesondere Vakuumversiegelung, für tiefgekühlte CCDs (9) oder APDs genutzt ist.

7. Detektor nach einem der Ansprüche 1 bis 6, **dadurch gekennzeichnet, dass** die Mikrolinsen-Anordnung (2) zur Erhöhung der Transmission oberflächenvergütet ist oder dass die Mikrolinsen-Anordnung (2) zur Erhöhung der Absorption oder Reduzierung von Streulicht vorzugsweise lokal eine Oberflächenbeschichtung aufweist.

8. Detektor nach einem der Ansprüche 1 bis 7, **dadurch gekennzeichnet, dass** die Mikrolinsen-Anordnung (2) auf die photosensitive Anordnung (1) aufgebracht, aufgedampft oder aufgeprägt ist.

9. Detektor nach einem der Ansprüche 1 bis 8, **dadurch gekennzeichnet, dass** die photosensitive Anordnung (1) ein CCD- oder APD-Zeilenarray oder ein zweidimensionales CCD- oder APD-Array oder parallelisierte CCDs oder APDs oder vorzugsweise front-illuminated EMCCDs aufweist.

10. Spektrometer mit einem Detektor nach einem der Ansprüche 1 bis 9.

11. Mikroskop, insbesondere Konfokal- oder Semikonfokalmikroskop, mit einem Detektor nach einem der Ansprüche 1 bis 9, wobei das Mikroskop ein einzelnes Detektionspinhole (6) oder einen Multispot- oder Zeilenscanner aufweisen kann.

## Claims

1. Detector for the spectral detection of light in a confocal or semiconfocal microscope, having
a photosensitive arrangement (1) having at least one photosensitive surface (9), there being arranged in a beam path upstream of the photosensitive arrangement (1) a means for focusing a spectrally split light onto the photosensitive arrangement (1),
the photosensitive arrangement (1) being a CCD or APD arrangement,
the focusing means having a microlens arrangement (2) with microlenses (8) and the microlenses (8) having a combination of a microcylinder lens array with focusing in the direction of the spectral splitting and at least one cylinder lens with focusing in the direction perpendicular thereto,
the at least one cylinder lens being an individual cylinder lens, a microcylinder lens, a rod lens or an array of such lenses,
**characterised in that** the microlenses (8) have different focal widths for focusing in the two directions and the microlenses (8) for the two directions are arranged on the same substrate so that the focus in both spatial directions is located in each case on the photosensitive arrangement (1).

2. Detector according to claim 1, **characterised in that** the microlenses (8) have at least one gradient index lens (GRIN) or at least one spherical lens, or **in that** the microlenses (8) are exclusively spherical lenses.

3. Detector according to claim 1 or claim 2, **characterised in that** the microlens (8) or the microlenses (8) has/have a spherical opening.

4. Detector according to any one of claims 1 to 3, **characterised in that** the microlens arrangement (2) has asymmetrical lenses or **in that** the microlens arrangement (2) has a combination of two transposed lenses or cylinder lens arrays.

5. Detector according to any one of claims 1 to 4, **characterised in that** the lens or cylinder lens arrays or microlenses (8) for the two directions are arranged at different sides of the substrate.

6. Detector according to any one of claims 1 to 5, **characterised in that** the microlens arrangement (2) is used as an aperture preferably for hermetic sealing, in particular vacuum sealing, for super-cooled CCDs (9) or APDs.

7. Detector according to any one of claims 1 to 6, **characterised in that** the microlens arrangement (2) is surface-coated in order to increase the transmission or **in that** the microlens arrangement (2) has a surface coating, preferably in a local manner, in order to increase the absorption or to reduce scattered light.

8. Detector according to any one of claims 1 to 7, **characterised in that** the microlens arrangement (2) is fitted, vapour-deposited or impressed on the photosensitive arrangement (1).

9. Detector according to any one of claims 1 to 8, **characterised in that** the photosensitive arrangement (1) has a CCD or APD line array or a two-dimensional CCD or APD array or has parallelised CCDs or APDs or preferably front-illuminated EMCCDs.

10. Spectrometer having a detector according to any one of claims 1 to 9.

11. Microscope, in particular a confocal or semiconfocal microscope, having a detector according to any one of claims 1 to 9, the microscope being able to have an individual detection pin hole (6) or a multispot or line scanner.

## Revendications

1. Détecteur destiné à la détection spectrale de lumière dans un microscope confocal ou semi-confocal, comprenant
un agencement photosensible (1) avec au moins une surface photosensible (9), étant entendu qu'un moyen destiné à focaliser une lumière fractionnée de façon spectrale sur l'agencement photosensible (1) est agencé devant l'agencement photosensible (1) dans une trajectoire de rayonnement ;
étant entendu que l'agencement photosensible (1) est un agencement CCD ou APD ;
étant entendu que le moyen de vocalisation présente un agencement de microlentilles (2) comprenant des microlentilles (8) et que les microlentilles (8) présentent une combinaison entre un réseau de microlentilles cylindriques produisant une focalisation dans la direction du fractionnement spectral et au moins une lentille cylindrique produisant une focalisation dans la direction perpendiculaire à celle-ci ;
étant entendu que l'au moins une lentille cylindrique est une lentille cylindrique individuelle, une microlentille cylindrique, une lentille-tige ou un réseau de lentilles de ce type,
**caractérisé en ce que** les microlentilles (8) présentent des distances focales différentes pour la focalisation dans les deux directions et que les microlentilles (8) sont agencées sur le même substrat pour les deux directions, de telle sorte que le point focal se trouve à chaque fois sur l'agencement photosensible (1) dans les deux sens de direction dans l'espace.

2. Détecteur selon la revendication 1, **caractérisé en ce que** les microlentilles (8) présentent au moins une lentille à gradient d'indice (GRIN) ou au moins une lentille sphérique ou **en ce que** les microlentilles (8) sont exclusivement des lentilles sphériques.

3. Détecteur selon la revendication 1 ou 2, **caractérisé en ce que** la microlentille (8) ou les microlentilles (8) présente ou présentent une ouverture sphérique.

4. Détecteur selon l'une des revendications 1 à 3, **caractérisé en ce que** l'agencement de microlentilles (2) présente des lentilles asymétriques ou **en ce que** l'agencement de microlentilles (2) présente une combinaison entre deux réseaux croisés de lentilles ou de lentilles cylindriques.

5. Détecteur selon l'une des revendications 1 à 4, **caractérisé en ce que** les réseaux de lentilles ou de lentilles cylindriques ou les microlentilles (8) sont agencés sur des côtés différents du substrat pour les deux directions.

6. Détecteur selon l'une des revendications 1 à 5, **caractérisé en ce que** l'agencement de microlentilles (2) est utilisé comme fenêtre aux fins du scellement de préférence hermétique, en particulier du scellement sous vide, pour des CCD (9) ou des APD réfrigérés.

7. Détecteur selon l'une des revendications 1 à 6, **caractérisé en ce que** l'agencement de microlentilles (2) présente une couche de surface antireflet aux fins de l'augmentation de la transmission ou **en ce que** l'agencement de microlentilles (2) présente, de préférence localement, un revêtement de surface aux fins de l'augmentation de l'absorption ou de la réduction de la lumière diffuse.

8. Détecteur selon l'une des revendications 1 à 7, **caractérisé en ce que** l'agencement de microlentilles (2) est posé, métallisé sous vide ou empreint sur l'agencement photosensible (1).

9. Détecteur selon l'une des revendications 1 à 8, **caractérisé en ce que** l'agencement photosensible (1) présente un réseau CCD ou APD en lignes ou un réseau CCD ou APD bidimensionnel ou des CCD ou des APS installés en parallèle ou de préférence des EMCCD à éclairage avant.

10. Spectromètre comprenant un détecteur selon l'une des revendications 1 à 9.

11. Microscope, en particulier microscope confocal ou semi-confocal, comprenant un détecteur selon l'une des revendications 1 à 9, étant entendu que le microscope peut présenter un trou de détection individuel (6) ou un scanner multispot ou à lignes.
